# EUROPÄISCHE PATENTANMELDUNG

(11) **EP 1 327 572 A1**
(43) Veröffentlichungstag der Anmeldung: **16.07.2003**
(21) Anmeldenummer: 02025470.2
(22) Anmeldetag: 15.11.2002
(51) Int. Cl.: B62D 33/06

(54) **System zur Einrichtung von Fahrerhäusern von Lastkraftwagen**

(30) Priorität: 10.01.2002 DE 10200629
(71) Anmelder: DaimlerChrysler AG, 70567 Stuttgart (DE)
(72) Erfinder: Bihaule, Bernd, 71134 Aidlingen (DE); Lindemann, Peter, 71120 Grafenau (DE); Rastetter, Ina, 75382 Althengstett (DE); Zygan, Andreas, Dr., 76316 Malsch (DE)

(57) **Zusammenfassung**

Bei einem System zur Einrichtung von Fahrerhäusern von Lastkraftwagen (2) mit einer begrenzten Anzahl an verschiedenen Typen an zwischen und hinter einem Fahrersitz (4) und einem Beifahrersitz (5) anbringbaren Einrichtungselementen (7) werden je nach Größe und/oder Form des jeweiligen Fahrerhauses jeweils unterschiedliche Typen der Einrichtungselemente (7) in variabler Anzahl eingesetzt.

## Beschreibung

Die Erfindung betrifft ein System zur Einrichtung von Fahrerhäusern von Lastkraftwagen.

Die DE 29 36 710 Al beschreibt ein Lastkraftwagen-Fahrerhaus mit einem hinter und zwischen den Fahrersitzen vorgesehenen Stauraum zur Aufnahme von Campingeinbauten. Hierbei sind die einzelnen Komponenten selbständige, komplette Einheiten und in ihrer Außenkontur als gegeneinander und gegen die Fahrerhausinnenkontur angepaßte Bausteine ausgebildet. Des weiteren sind an den Fahrerhausinnenwänden den Bausteinen angepaßte Befestigungspunkte vorgesehen. Dabei kann zumindest ein Teil der Bausteine soweit von gleicher Außenkontur sein, daß sie gegeneinander auswechselbar sind.

Aus der DE 26 17 941 Al ist ein Lastkraftwagen-Fahrerhaus mit Fahrer- und Beifahrersitz und mit zumindest eine Kochmulde und eine Spüle umfassenden Einbauten bekannt, bei welchem zur Verbesserung des Wohnwertes des Fahrerhauses die Kochmulde und die Spüle in Längsrichtung hintereinander liegend unmittelbar zwischen Fahrersitz und Beifahrersitz liegend angeordnet sind.

Die in diesen beiden Dokumenten beschriebene Einrichtung ist jedoch an das jeweils dargestellte Fahrerhaus angepaßt und ausschließlich für dasselbe geeignet.

Es ist daher Aufgabe der vorliegenden Erfindung, ein System zur Einrichtung von Fahrerhäusern von Lastkraftwagen zu schaffen, mit welchem die Einrichtungselemente für die Fahrerhäuser in einfacher und insbesondere kostengünstiger Weise an unterschiedliche Typen von Fahrerhäusern angepaßt werden können.

Erfindungsgemäß wird diese Aufgabe durch die in Anspruch 1 genannten Merkmale gelöst.

Das erfindungsgemäße System ist in der Art eines Baukastens aufgebaut und ermöglicht dadurch die Verwendung identischer Einrichtungselemente für verschiedene Arten von Fahrerhäusern, also insbesondere von Fahrerhäusern mit unterschiedlicher Größe und Form. Die begrenzte Anzahl an verschiedenen Typen der Einrichtungselemente bildet eine Gruppe, aus welcher je nach Größe und/oder Form des jeweiligen Fahrerhauses die geeigneten Einrichtungselemente in variabler Anzahl ausgewählt werden, wodurch sich ein modularer Aufbau jeder durch das erfindungsgemäße System erstellbaren Einrichtung ergibt.

Aufgrund dieses modularen Aufbaus der jeweiligen Einrichtung ist es möglich, in den verschiedenen Arten von Fahrerhäusern eine große Anzahl an Gleichteilen einzusetzen, was unter anderem aufgrund der niedrigeren Werkzeugkosten die Herstellungskosten für sämtliche Arten von Fahrerhäusern verringert, da mit einer relativ geringen Anzahl an unterschiedlichen Bauteilen eine große Bandbreite an Fahrerhäusern abgedeckt werden kann.

Vorteilhafte Ausgestaltungen und Weiterbildungen der Erfindung ergeben sich aus den Unteransprüchen sowie dem nachfolgend anhand der Zeichnung prinzipmäßig dargestellten Ausführungsbeispiel.

Es zeigt:
- Fig. 1: das erfindungsgemäße Einrichtungssystem bei einem ersten Fahrerhaus;
- Fig. 2: das erfindungsgemäße Einrichtungssystem bei einem zweiten Fahrerhaus;
- Fig. 3: das erfindungsgemäße Einrichtungssystem bei einem dritten Fahrerhaus;
- Fig. 4: das erfindungsgemäße Einrichtungssystem bei einem vierten Fahrerhaus; und
- Fig. 5: einen Schnitt durch eine Ablagevorrichtung mit einem daran angebrachten Klapptisch als Beispiel für ein Einrichtungselement.

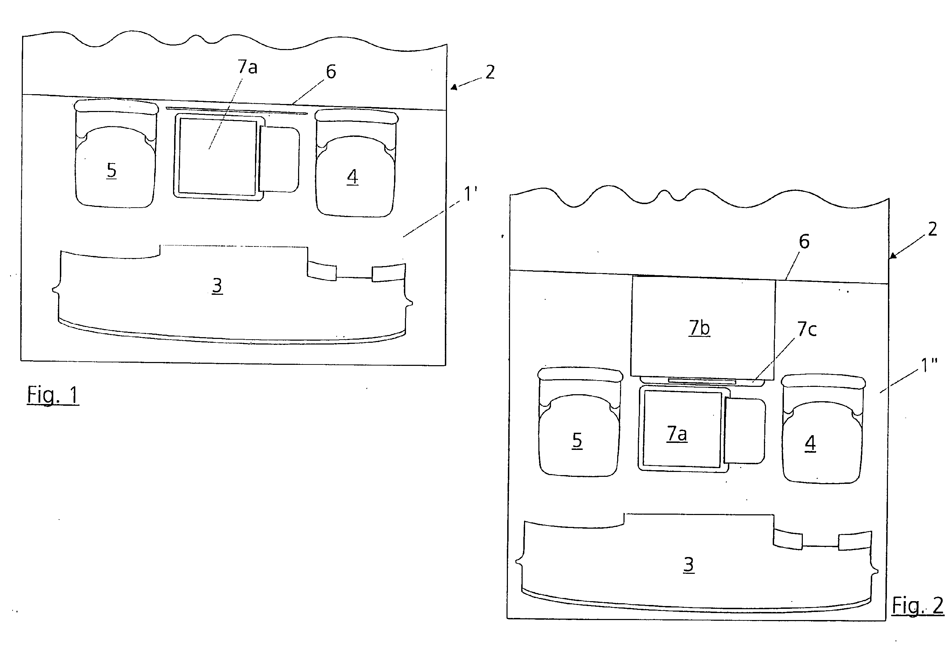

Fig. 1 zeigt ein Fahrerhaus 1' eines anhand seiner Umrisse äußerst schematisch dargestellten Lastkraftwagens 2. In dem Fahrerhaus 1' befinden sich in an sich bekannter Weise eine Instrumententafel bzw. Armaturenbrett 3, ein Fahrersitz 4 sowie ein Beifahrersitz 5, wobei die Position zwischen dem Fahrersitz 4 und dem Beifahrersitz 5 auch vertauscht sein kann.

Die Figuren 2, 3 und 4 zeigen weitere Fahrerhäuser 1'', 1''' und 1'''', welche ebenfalls die Instrumententafel 3, den Fahrersitz 4 und den Beifahrersitz 5 aufweisen. Allerdings besitzen die Fahrerhäuser 1', 1'', 1''' und 1'''' unterschiedliche Formen und/oder Größen, was durch die jeweilige Rückwand 6 hinter dem Fahrersitz 4 und dem Beifahrersitz 5 angedeutet ist. Auch bezüglich der Höhe der Fahrerhäuser 1', 1'', 1''' und 1'''' können selbstverständlich Unterschiede gegeben sein.

Zwischen dem Fahrersitz 4 und dem Beifahrersitz 5 sowie zwischen der Rückwand 6 und den beiden Sitzen 4 und 5 sind in sämtlichen Fahrerhäusern 1', 1'', 1''' und 1'''' verschiedenartige Einrichtungselemente 7 angeordnet, welche für jedes Fahrerhaus 1', 1'', 1''' und 1'''' aus einer begrenzten Anzahl an verschiedenen Typen der Einrichtungselemente 7 ausgewählt werden. Für jedes Fahrerhaus 1', 1'', 1''' und 1'''' werden also abhängig von seiner jeweiligen Form und Größe die entsprechenden bzw. geeigneten Einrichtungselemente 7 ausgewählt, wodurch sich für jede Einrichtung des betreffenden Fahrerhauses 1', 1'',1''' und 1'''' ein modularer Aufbau ergibt. Dadurch kann in den verschiedenen Arten von Fahrerhäusern 1', 1'', 1''' und 1'''' eine große Anzahl an Gleichteilen eingesetzt werden, wodurch sich wiederum die Herstellungskosten für die Fahrerhäuser 1', 1'', 1''' und 1'''' verringern.

Die nachfolgend beschriebenen Fahrerhäuser 1', 1'',1''' und 1'''' und die dabei vorgesehenen Einrichtungselemente 7 sind somit lediglich als beispielhaft anzusehen und es bestehen für andersartige Fahrerhäuser auch andere Möglichkeiten zum Einrichten derselben.

Die Fahrerhäuser 1', 1'' und 1''' weisen einen mit gestrichelten Linien angedeuteten Getriebetunnel 8 auf, der die Höhe eines Bodens 9 des jeweiligen Fahrerhauses 1', 1'' und 1''' erhöht. Das Fahrerhaus 1'''' besitzt keinen solchen Getriebetunnel 8 und ist mit einem ebenen Boden 9 ausgestattet.

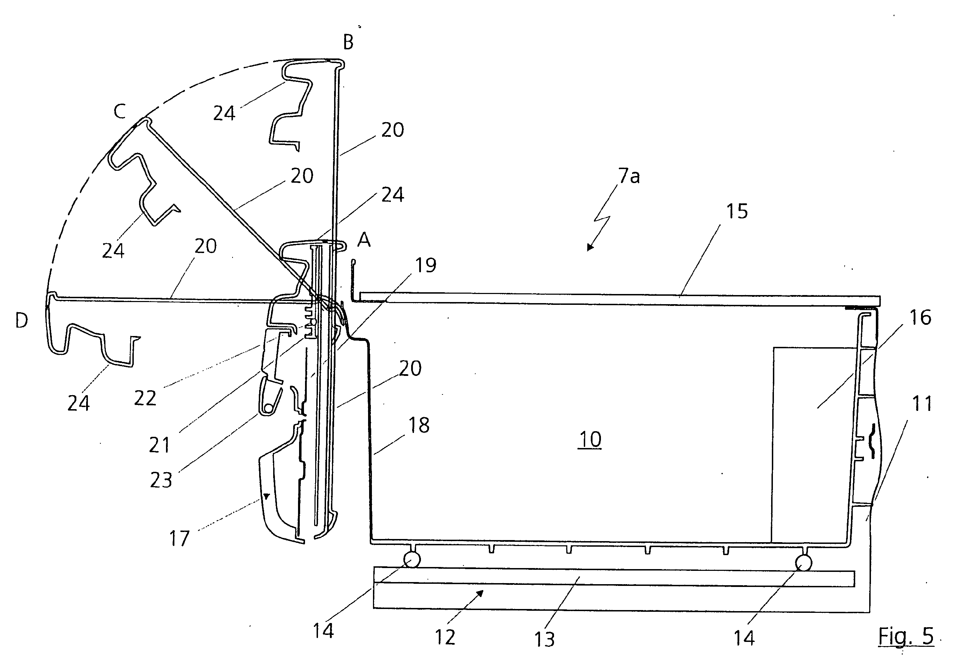

In Fig. 1 ist zwischen dem Fahrersitz 4 und dem Beifahrersitz 5 des Fahrerhauses 1' eine Ablagevorrichtung 7a vorgesehen, welche unter Bezugnahme auf Fig. 5 näher beschrieben ist.

Bei dem Fahrerhaus 1" gemäß Fig. 2 ist zusätzlich zu der Ablagevorrichtung 7a, die wiederum zwischen dem Fahrersitz 4 und dem Beifahrersitz 5 angeordnet ist, hinter den Sitzen 4 und 5 und vor der Rückwand 6 ein Schrankelement 7b mit einer daran angebrachten Schublade 7c vorgesehen. Das Schrankelement 7b mit der Schublade 7c dient für den Fahrer des Lastkraftwagens zur Ablage nicht dargestellter Gegenstände, wie sämtliche Einrichtungselemente 7, auf die im folgenden Bezug genommen wird.

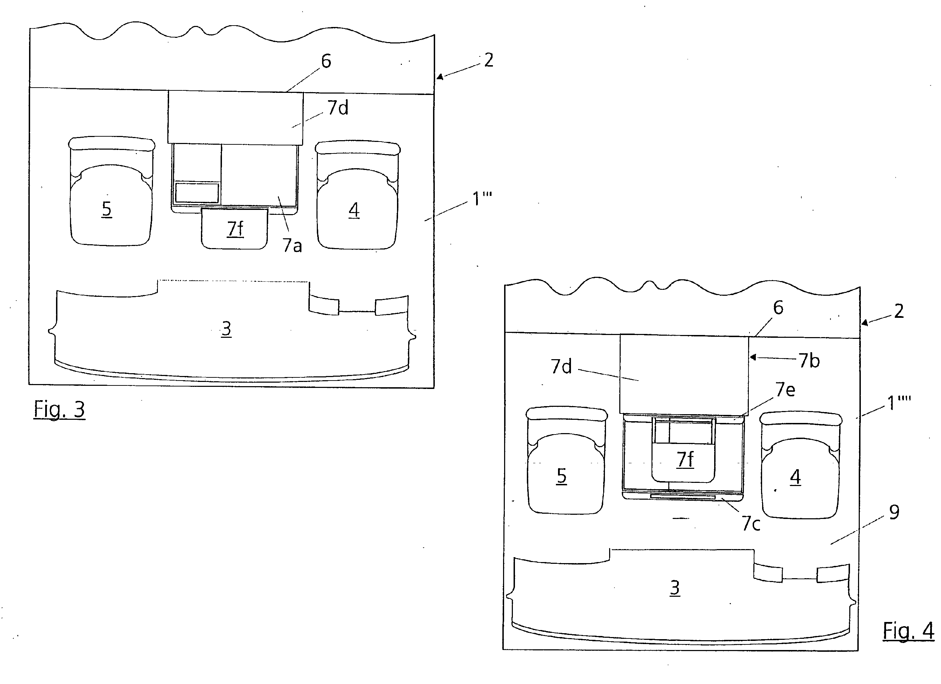

Das Fahrerhaus 1''' gemäß Fig. 3 weist hinter dem Fahrersitz 4 und dem Beifahrersitz 5 ein weiteres, alternativ ausgestattetes Schrankelement 7d mit einer daran angebrachten Schublade 7e auf. Am vorderen Ende der Schublade 7e ist eine Tischplatte 7f angeordnet, welche der Fahrer herausziehen und als Ablage benutzen kann.

In Fig. 4 ist das Fahrerhaus 1'''' dargestellt, welches in vertikaler Richtung des Fahrerhauses 1'''' übereinander das Schrankelement 7b mit der Schublade 7c und darauf das Schrankelement 7d mit der daran angebrachten Schublade 7e und der Tischplatte 7f aufweist. Bei dem Fahrerhaus 1'''' ist diese Anordnung der beiden Schrankelemente 7b und 7d in vertikaler Richtung übereinander deshalb möglich, weil dort, wie bereits erwähnt, der Getriebetunnel 8 gemäß der Fahrerhäuser 1', 1" und 1''' nicht vorgesehen ist und das Fahrerhaus 1'''' statt dessen einen ebenen Boden 9 aufweist. Selbstverständlich könnten auch zwei identische Schrankelemente 7b bzw. 7d vorgesehen sein.

Der modulare Aufbau der Einrichtung der Fahrerhäuser 1', 1'',1''' und 1''' mit den Einrichtungselementen 7 kann selbstverständlich auch andere Elemente umfassen, wie beispielsweise einen Kühlschrank, einen Müllbehälter und/oder eine Liege und es ist, je nach Kundenwunsch, ein Kombinieren in allen Ebenen des jeweiligen Fahrerhauses 1', 1'', 1''' und 1''' möglich.

Die Ablagevorrichtung 7a ist in Fig. 5 im Schnitt dargestellt und wird im folgenden näher erläutert.

Die in beliebiger Anordnung innerhalb der Fahrerhäuser 1', 1'', 1''' und 1'''' anbringbare Ablagevorrichtung 7a zur Aufbewahrung und Ablage von Gegenständen weist einen Aufnahmebehälter 10 auf, in welchem eine ebenfalls nicht dargestellte Bedienperson, beispielsweise der Fahrer des Kraftfahrzeugs, verschiedenste Gegenstände unterbringen kann. Der Aufnahmebehälter 10 ist in der Art einer Schublade ausgeführt und in einem Gehäuse 11 über Führungsmittel 12 verschieblich gelagert.

Die Führungsmittel 12, welche eine Verschiebung des Aufnahmebehälters 10 gegenüber den fest mit dem Kraftfahrzeug verbundenen Gehäuse 11 ermöglichen, weisen im vorliegenden Fall zwei Führungsschienen 13, die fest mit dem Gehäuse 11 verbunden sind und von denen lediglich eine dargestellt ist, sowie mehrere an dem Aufnahmebehälter 10 angebrachte Räder 14 auf. Statt der auf den Führungsschienen 13 abrollenden Räder 14 sind selbstverständlich auch völlig andersartige Elemente denkbar, die eine Verschiebung des Aufnahmebehälters 10 gegenüber dem Gehäuse 11 erlauben, wie z.B. in eine U-förmige Führungsschiene 12 eingreifende Führungen oder dergleichen.

An seiner Oberseite ist das Gehäuse 11 mit einem den Aufnahmebehälter 10 abdeckenden Deckel 15 versehen, welcher beispielsweise als Liege für den Fahrer des Kraftfahrzeugs benutzt werden kann. Durch Herausziehen des Aufnahmebehälters 10 aus dem Gehäuse 11 ist der Aufnahmebehälter 10 also von oben her zugänglich und kann be- bzw. entladen werden. In dem Aufnahmebehälter 10 befindet sich ein Müllbehälter 16, welcher zur Aufnahme von Abfall oder dergleichen vorgesehen ist. Selbstverständlich können in dem Aufnahmebehälter 10 auch noch andere, nicht dargestellte Behälter vorgesehen sein.

An der der Bedienperson zugewandten Seite des Aufnahmebehälters 10 befindet sich eine Abdeckung 17, welche einen gewissen Abstand von einer vorderen Wandung 18 des Aufnahmebehälters 10 aufweist, so daß sich in diesem Bereich ein Stauraum 19 bildet. In diesem Stauraum 19 ist eine Tischplatte 20 in ihrer Nicht-Gebrauchsstellung angeordnet und in Tischplatten-Führungsmitteln 21, welche im wesentlichen in senkrechter Richtung verlaufen, geführt. Wenn der Aufnahmebehälter 10 aus dem Gehäuse 11 herausgefahren wird, so bewegt sich die in den Stauraum 19 angeordnete Tischplatte 20 in gleicher Richtung, also zu der Bedienperson hin. Die Tischplatten- Führungsmittel 21 können dabei durch die verschiedensten, an sich bekannten Elemente gebildet werden, die eine Verschieben der Tischplatte 20 relativ zu dem Aufnahmebehälter 10 erlauben.

Durch Bewegen entlang der Tischplatten-Führungsmittel 21 und Kippen um eine im wesentlichen horizontal verlaufende Achse 22 kann die Tischplatte 20 in eine Gebrauchsstellung geschwenkt werden, in welcher die Tischplatte 20 im wesentlichen horizontal ausgerichtet ist.

Fig. 5 zeigt die Tischplatte 20 in vier verschiedenen Positionen, die mit A, B, C und D bezeichnet sind, wobei die Position A die Tischplatte 20 in ihrer Nicht-Gebrauchsstellung, also in senkrechter Ausrichtung in dem Stauraum 19 zeigt. Die Position B zeigt die Tischplatte 20 in einer vollständig aus den Tischplatten-Führungsmitteln 21 herausgezogenen Stellung, die Position C zeigt eine Zwischenstellung der Tischplatte 20 und die Position D zeigt die Gebrauchsstellung der Tischplatte 20, in welcher diese im wesentlichen horizontal ausgerichtet ist. In dieser Position sind keine zusätzlichen Elemente notwendig, um ein sicheres Halten der Tischplatte 20 zu gewährleisten, da dieselbe gegenüber der Abdeckung 17 einrastet.

Um ein versehentliches Lösen der Tischplatte 20 zu vermeiden bzw. ein Klappern der selben während der Fahrt zu verhindern, ist die Tischplatte 20 über eine lösbare Verriegelungseinrichtung 23 mit der Abdeckung 17 verbunden, welche von an sich bekannter Bauart sein kann und welche vor dem Entnehmen der Tischplatte 20 aus dem Stauraum 19 gelöst werden muß.

Die Tischplatte 20 weist eine Abdeckung 24 auf, welche in senkrechter Stellung der Tischplatte 12 in Richtung der Bedienperson und in waagrechter Stellung der Tischplatte 20 nach unten zeigt und dazu dient, den Stauraum 19 von seiner Ober- und Vorderseite her geschlossen zu gestalten.

Der Fahrer hat mittels der beschriebenen Ablagevorrichtung 7a die Möglichkeit, durch Herausziehen des Aufnahmebehälters 10 aus dem Gehäuse 11 die Tischplatte 20 in seine Richtung zu bewegen und dieselbe anschließend aus dem Stauraum 19 zu entnehmen.

## Patentansprüche

1. System zur Einrichtung von Fahrerhäusern (1',1'',1''',1''') von Lastkraftwagen (2) mit einer begrenzten Anzahl an verschiedenen Typen an zwischen und hinter einem Fahrersitz (4) und einem Beifahrersitz (5) anbringbaren Einrichtungselementen (7), wobei je nach Größe und/oder Form des jeweiligen Fahrerhauses (1',1'',1''',1''') jeweils unterschiedliche Typen der Einrichtungselemente (7) in variabler Anzahl eingesetzt werden.

2. System nach Anspruch 1,
**dadurch gekennzeichnet, daß**
die Einrichtungselemente (7) durch Ablagevorrichtungen (7a), Schrankelemente (7b,7d), Schubladen (7c,7e)und/oder Tischplatten (7f) gebildet sind.

3. System nach Anspruch 1 oder 2,
**dadurch gekennzeichnet, daß**
bei einem Fahrerhaus (1',1'',1''') mit einem Getriebetunnel (8) zwischen dem Fahrersitz (4) und dem Beifahrersitz (5) eine Schublade (7c) über dem Getriebetunnel (8) angeordnet ist.

4. System nach Anspruch 3,
**dadurch gekennzeichnet, daß**
bei einem Fahrerhaus (1'''') mit ebenem Boden (9) die bei dem Fahrerhaus (1',1'',1''') mit Getriebetunnel (8) verwendete Schublade (7c) in vertikaler Richtung übereinander zweimal verwendet wird.
